# EUROPEAN PATENT APPLICATION

(11) **EP 4 491 447 A2**
(43) Date of publication of application: **15.01.2025**
(21) Application number: 24185923.0
(22) Date of filing: 02.07.2024
(51) Int. Cl.: B60L 58/19, B60L 58/20, B62M 6/40

(54) **BATTERY SYSTEMS FOR A BICYCLE**

(30) Priority: 13.07.2023 US 202318351971
(71) Applicant: SRAM, LLC., Chicago, IL 60607 (US)
(72) Inventor: Hahn, Sage, Chicago, 60607 (US); Sessions, Shelby, Chicago, 60607 (US); Heyna, Sebastian, 97424 Schweinfurt (DE)
(74) Representative: Thum, Bernhard

(57) **Abstract**

A battery system includes an auxiliary battery releasably coupled to a main battery. The main battery includes a charge controller and has a first output voltage. The main battery is configured to be electrically coupled to a bicycle drive unit and supply power to the drive unit. The auxiliary battery has a second output voltage. The auxiliary battery is releasably coupled to the main battery in series such that a total output voltage of the main battery and auxiliary battery is equal to a sum of the first and second output voltages.

## Description

### Field of the Disclosure

The present application generally relates to a battery system for a bicycle, including a battery system used to power a bicycle drive system, and to methods for assembling and using the battery system on the bicycle.

### Background

Electric assist, or electrically powered, bicycles typically are powered with one or more batteries that may be relatively heavy and expensive. When participating in shorter rides, where extra range is not required, a rider needlessly expends extra energy transporting the heavy battery. While secondary cell stacks may be available to extend the range of a primary battery, the secondary and primary cell stacks are typically connected in parallel during discharge, which does not increase the total voltage of the system. In other systems, the secondary battery may be used in isolation from the primary battery.

### Summary

In one aspect, one embodiment of a drive system for a bicycle includes a drive unit, a main battery and an auxiliary battery. The main battery includes a charge controller and has a first output voltage. The main battery is configured to be electrically coupled to the drive unit and supply power to the drive unit. The auxiliary battery has a second output voltage. The auxiliary battery is releasably coupled to the main battery in series such that a total output voltage of the main battery and auxiliary battery is equal to a sum of the first and second output voltages.

In another aspect, one embodiment of a battery system for a bicycle includes a main battery including a charge controller and having a first output voltage. An auxiliary battery has a second output voltage. The auxiliary battery is moveable relative to the main battery between a first engaged configuration, wherein the auxiliary battery is releasably coupled to the main battery in series such that a total output voltage of the main battery and auxiliary battery is equal to a sum of the first and second output voltages, and a first disengaged configuration, wherein the auxiliary battery is decoupled from the main battery. The main battery may include a bicycle mounting arrangement. The mounting arrangement may be configured for mounting the main battery to a bicycle frame and/or a bicycle drive unit.

In one embodiment, a storage container is moveable relative to the main battery between an engaged configuration, wherein the storage container is releasably coupled to the main battery, and a disengaged configuration, wherein the storage container is decoupled from the main battery.

In yet another aspect, one embodiment of a battery system for a bicycle includes a main battery having a charge controller. The main battery has a first output voltage and is configured to be electrically coupled to the drive unit and supply power to the drive unit. An auxiliary battery has a second output voltage. The auxiliary battery is releasably coupled to the main battery in series such that a total output voltage of the main battery and auxiliary battery is equal to a sum of the first and second output voltages. A switching network is operably coupled to the main battery and the auxiliary battery, wherein the switching network is configured to connect the main battery and auxiliary battery in parallel or in series with a charge source.

The various embodiments of the battery system and drive system, and methods for the use and assembly thereof, provide significant advantages over other battery systems, drive systems, bicycles, and methods. For example, and without limitation, the main battery may be configured as a lighter small capacity battery for short rides where extra range is not required. The auxiliary battery may be used for longer rides, which require additional battery capacity. The rider is able to meet the battery capacity needs for short rides and long rides by adding additional battery capacity without the need to balance the state of charge between the two cell stacks or by limiting extra capacity to lower motor assist levels.

Another advantage is that the auxiliary battery may be replaced with an accessory, such as a storage container. This may be particularly advantageous on shorter rides, for example when commuting, or running errands, where storage capacity may be at a premium.

The foregoing paragraphs have been provided by way of general introduction and are not intended to limit the scope of the claims presented below. The various preferred embodiments, together with further advantages, will be best understood by reference to the following detailed description taken in conjunction with the accompanying drawings.

### Brief Description of the Drawings

Objects, features, and advantages of the present invention will become apparent upon reading the following description in conjunction with the drawing figures, in which:
FIG. 1A is a side view of a bicycle with a drive unit and battery system.
FIG. 1B is a schematic view of a drive unit connected only to a main battery.
FIG. 1C is a schematic view of a drive unit connected to a main battery and an auxiliary battery.
FIG. 2A is a block diagram of a main battery configured for parallel charging.
FIG. 2B is a block diagram of an auxiliary battery configured for parallel charging.
FIG. 3 is a schematic view showing a main battery and an auxiliary battery connected to a charge source in parallel.
FIG. 4 is a flow chart showing parallel charging of a battery system.
FIG. 5A is a block diagram of a main battery configured for series charging.
FIG. 5B is a block diagram of an auxiliary battery configured for series charging.
FIG. 6 is a flow chart showing series charging of a battery system.
FIG. 7 is a schematic of a battery system being charged in series.
FIG. 8 is a flow chart of a battery control system.
FIG. 9A is a block diagram of one embodiment of a battery system.
FIG. 9B is a block diagram of the battery system shown in Figure 9A with only the main battery connected to the system output.
FIG. 9C is a block diagram of the battery system shown in Figure 9A with the main battery and auxiliary battery connected to the system output.
FIG. 9D is a block diagram of the battery system shown in Figure 9A in a parallel charging state.
FIG. 10 is a schematic view of one embodiment of a main battery and auxiliary battery cell arrangement.
FIG. 11 is a side view of one embodiment of an auxiliary battery coupled to a main battery.
FIG. 12 is a cross-sectional view of the auxiliary battery and main battery shown in Figure 11.
FIG. 13 is a cross-sectional view of the auxiliary battery and main battery taken along line 13-13 of Figure 11.
FIG. 14 is a cross-sectional view of the auxiliary battery and main battery taken along line 14-14 of Figure 11.
FIG. 15A is a top view of the auxiliary battery and main battery shown in Figure 11.
FIG. 15B is a bottom view of the auxiliary battery and main battery shown in Figure 11.
FIG. 16 is a top view of a main battery coupled to a storage container.
FIG. 17 is a cross-sectional view of the main battery and storage container taken along line 17-17 of Figure 16.
FIG. 18 is an exploded view of a main battery and a storage container.
FIG. 19 is an enlarged partial view of one embodiment of a latch in a closed position.
FIG. 20 is an enlarged partial view of the latch shown in Figure 19 in an open position.

### Detailed Description of the Disclosure

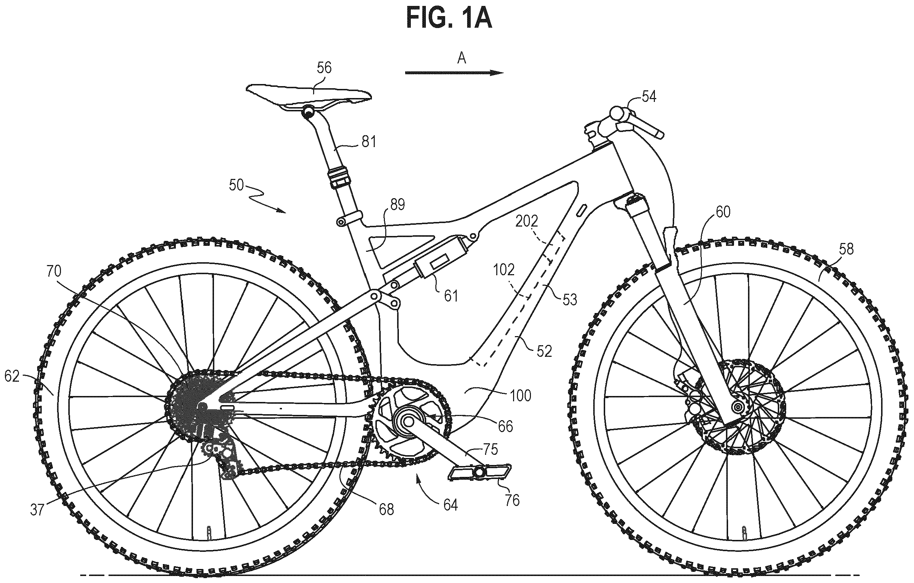

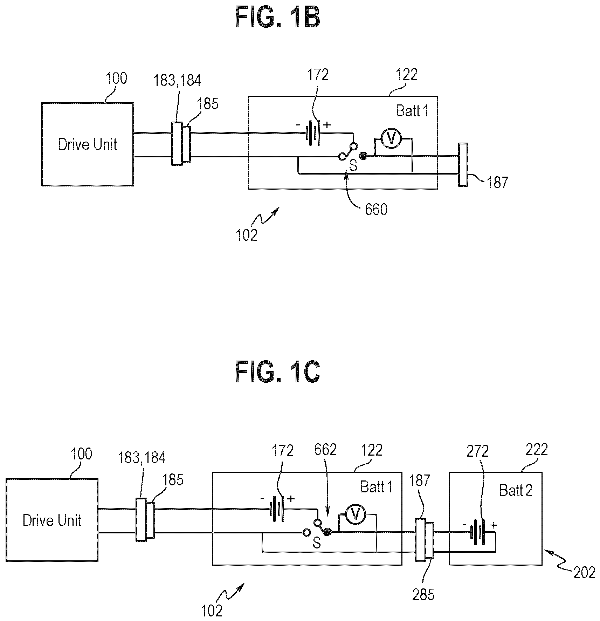

It should be understood that the term "plurality," as used herein, means two or more. The term "longitudinal," as used herein means of or relating to a length or lengthwise direction. The term "lateral," as used herein, means situated on, directed toward or running in a side-to-side direction. The term "coupled" means connected to or engaged with, whether directly or indirectly, for example with an intervening member, and does not require the engagement to be fixed or permanent, although it may be fixed or permanent. The term "connected" may refer to an electrical or mechanical connection. The term "communicating" refers to a connection allowing for the transfer of power and/or data, and may include a wired or wireless connection. The terms "first," "second," and so on, as used herein are not meant to be assigned to a particular component so designated, but rather are simply referring to such components in the numerical order as addressed, meaning that a component designated as "first" may later be a "second" such component, depending on the order in which it is referred. It should also be understood that designation of "first" and "second" does not necessarily mean that the two components or values so designated are different, meaning for example a first direction may be the same as a second direction, with each simply being applicable to different components. The terms "upper," "lower," "rear," "front," "fore," "aft," "vertical," "horizontal," "right," "left," "inboard," "outboard" and variations or derivatives thereof, refer to the orientations of an exemplary bicycle 50, shown in FIG. 1A, from the perspective of a user seated thereon, for example with an "inboard" component or feature being closer to a vertical mid-plane of the bicycle extending in a direction A. The term "transverse" means non-parallel. The terms "outer" and "outwardly" refers to a direction or feature facing away from a centralized location, for example the phrases "radially outwardly," "radial direction" and/or derivatives thereof, refer to a feature diverging away from a centralized location. Conversely, the terms "inward" and "inwardly" refers to a direction facing toward the centralized or interior location. The term "subassembly" refers to an assembly of a plurality of components, with subassemblies capable of being further assembled into other subassemblies and/or a final assembly, such as the bicycle 50.

FIG. 1A illustrates one example of a human powered vehicle, which may also include an electrically powered drive system. In this example, the vehicle is one possible type of bicycle 50, such as an electric bicycle (e-bike).. Alternatively, the bicycle 50 could be a mountain bike, road bike, etc. The bicycle 50 has a frame 52, handlebars 54 near a front end of the frame 52, and a seat or saddle 56 for supporting a rider over a top of the frame 52. The bicycle 50 also has a first or front wheel 58 carried by a front fork subassembly 60 supporting the front end of the frame 52. The bicycle 50 also has a second or rear wheel 62 supporting a rear end of the frame 52. The rear end of the frame 52 may be supported by a rear suspension component 61, such as a rear shock. The bicycle 50 has a drive train 64 with a crank assembly 66 that is operatively coupled via a roller chain 68 to a rear cassette 70 or a driven sprocket assembly near the hub providing a rotation axis of the rear wheel 62. The crank assembly 66 includes at least one, and typically two, crank arms 75 and pedals 76. A crank spindle or shaft may connect the two crank arms. The crank shaft defines a center rotational axis of the chainring assembly. The crank assembly may also include other components.

A rear gear change device 37, such as a derailleur, is disposed at the rear wheel 62 to move the roller chain 68 through different sprockets of the cassette 70. In one embodiment, a front gear changer device (not shown), such as a derailleur, may be provided to move the chain 68. In the illustrated example, the saddle 56 is supported on a seat post 81 having an end portion received in a top of a frame seat tube 89 of the frame. A clamping ring may be tightened to secure the upper seat post 81 to the lower frame seat tube 89. In FIG. 1A, the arrow A depicts a normal riding or forward moving direction of the bicycle 50.

Referring to FIG. 1A, the bicycle 50 includes a drive unit 100 mounted on the frame 52 and coupled to the crank assembly 66. The drive unit 100 may be powered to assist, partially or entirely, with the rotation of the crank assembly 66, the associated movement of the chain 68, and the associated rotation of the cassette 70 and rear wheel 62. The drive unit 100 may be electrically coupled to an energy storage device, referred to as a main battery 102, which supplies power to the drive unit 100.

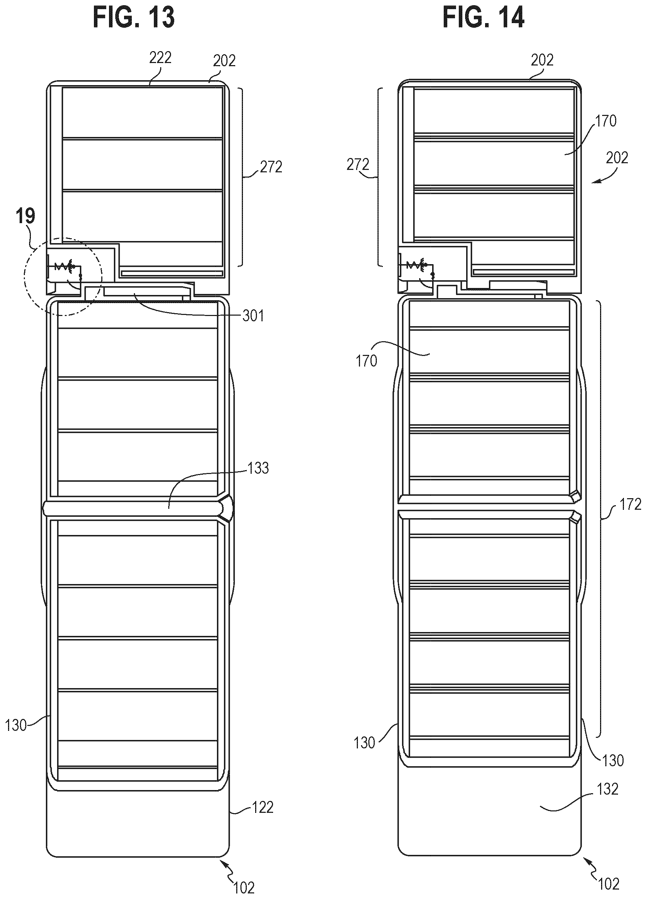

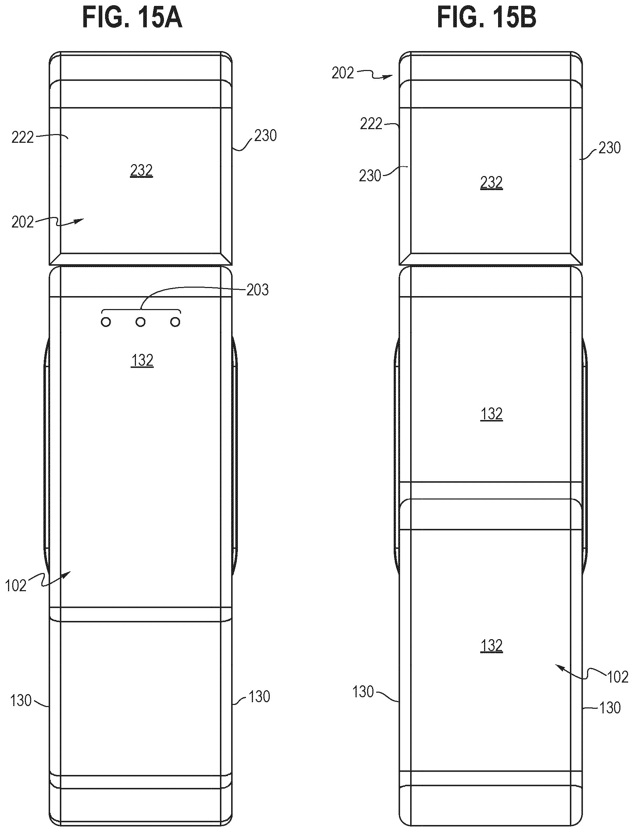

Referring to FIGS. 1C, 3 and 11-15B, a battery system 103 includes the main battery 102 and an auxiliary battery 202, which may be releasably coupled, both mechanically and electrically, with a coupler. Referring to FIG. 1A-C, the main battery 102 includes a contact connection, or output 185, which may be connected to the drive unit 100 contact connection 184 or charge source 183. The main battery 102 may be coupled to the auxiliary battery 202 such that the main battery output power may be routed to the auxiliary battery. The main battery 102 and auxiliary battery 202 are connected in series during discharge such that the total output voltage is increased and the total system capacity is also increased. For example and without limitation, if the main battery 102 has a nominal voltage of V1 (e.g., 36V) and a nominal capacity of C1 (e.g., 626Wh), and the auxiliary battery 202 has a nominal voltage of V2 (e.g., 10.8V) and a nominal capacity of C2 (e.g., 188Wh), then the total system voltage is VT=V1 + V2 (e.g., 46.8V) and the nominal capacity CN = C1 + C2 (e.g., 814Wh). It should be understood that the voltage and capacity values are merely exemplary and other voltages and capacities are also suitable, meaning any voltage and capacity of the main battery 102 may be combined with any voltage and capacity of the expander battery, or auxiliary battery 202. In one embodiment, the drive unit 100 may accept VT between and including 20Vdc to 60Vdc.

The main battery 102 is coupled to the drive unit 100 and/or frame 52, with a main battery contact, or output 185 engaging a drive unit battery contact connection 184. The battery contact connection on the main battery 102 contacts, and is engaged by, the corresponding contact on the drive unit, or frame 52, which may be defined by a pair of prongs. The main battery 102 may be secured to the drive unit 100 and/or frame 52, and held in place to maintain an electrical connection, with a mounting arrangement.

The mounting arrangement 120 may be defined by the shape of a main battery housing 122 and the interface between the housing 122, a bash guard, frame 52 and/or drive unit 100. The phrase "mounting arrangement" refers to any structure that maintains the position of the main battery device 102 relative to the frame 52 and/or drive unit 100, and may include the interface between the housing 122 and the frame 52 and/or drive unit 100, including the interface between the contacts 124, 126, and/or may include additional fasteners, such as bolts, tabs, clips, snaps, detents, insert/socket interfaces and/or other suitable connectors. The main battery 102, and the housing 122 in particular, is releasably connected to the frame 52 and/or drive unit 100, meaning the energy storage device 102 and housing 122 may be moved from an engaged position to a disengaged position, and may be replaced with another energy storage device. The auxiliary battery 202 also includes a housing 122, which may be releasably coupled to the main battery housing 122 as further explained below.

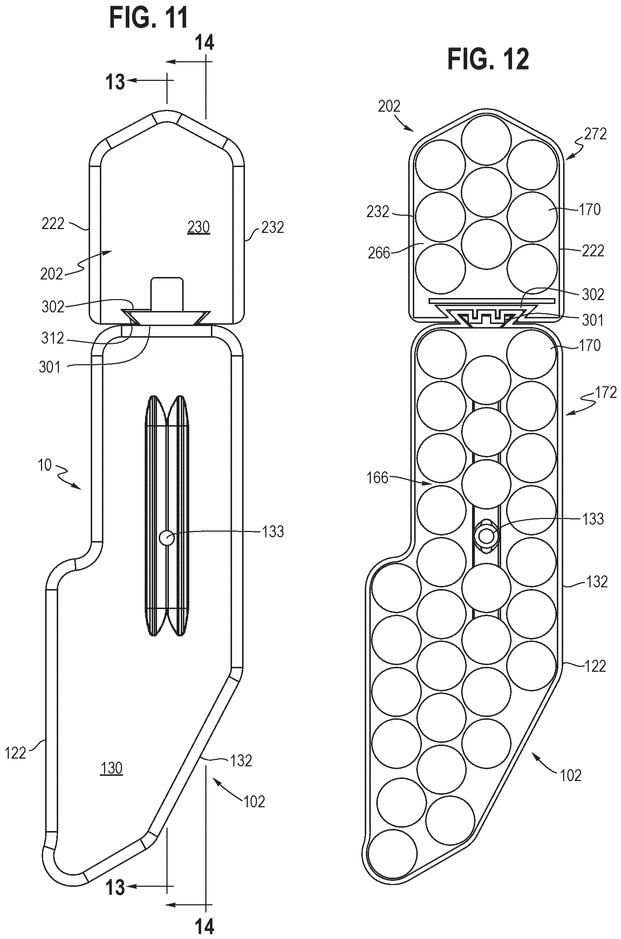

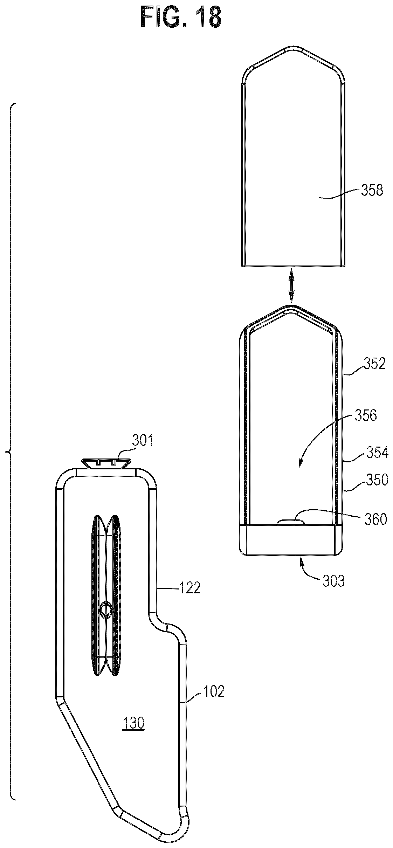

Referring to FIGS. 11-18, the housing 122, 222 may be configured with a pair of laterally spaced apart opposite sidewalls 130, 230, or covers, and a peripheral wall 132, 232 extending between and connected to the sidewalls 130, 230. One or more of the peripheral wall 132, 232 and sidewalls 130, 230 may define a shell, which is covered by the other sidewall, with the sidewalls 130, 230 each defining a cover. The side walls 130 may be coupled, for example by clamping, with a fastener 133.

The housing 122 may include one or more charge ports, including the battery contact connection, or output 185. The battery contact connection may be a USB-C port, or other electrical port, on the main battery 102. The port may be located and exposed on any surface of the main battery 102, for example a surface of the main battery that may be covered when the main battery 102 is installed in the bicycle 50 as shown in FIG. 1A. For example, the main battery 102 may be mounted in, for example by sliding, in downtube 53 of the frame 52. In one embodiment, the main battery 102 may include a first charge port that is configured as a DC charge port, including for example a pair of electrical contacts, and a second charge port may be configured as a USB C charge port. The charge ports may be co-located, or alternatively, one or both of the charge ports may be spaced apart and located on different parts of the housing, for example on one of the sidewalls 130. It should be understood that the charge ports may be located, separately or together, on any portion of the housing. In another embodiment, the main battery 102 is configured with only a single charge port.

The sidewalls 130, 230 and peripheral wall 132, 232 define an interior cavity 166, 266 of the housing. The sidewalls 130, 230 may be attached to the peripheral wall 132, 232 with a plurality of fasteners shown as screws, or may be integrally formed therewith or connected with other fasteners, such as adhesive, snap-fit, tabs, clips and/or other suitable fasteners.

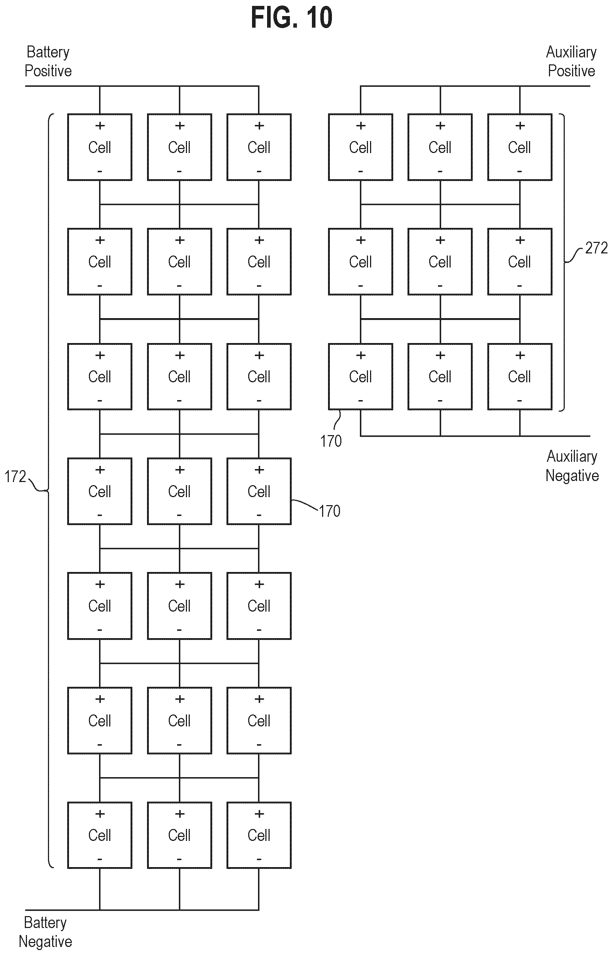

Now referring to FIGS. 10 and 12, the main battery 102 and auxiliary battery 202 each include a plurality of battery cells 170 disposed or located in the housing 122, 222, and in the interior cavity 166, 266 of the housing 122, 222 in particular. The battery cells 170 are individual cells that are connected in series and parallel to create a cell stack 172, 272. Battery pack cell configurations are described by the number of cells 170 in series and the number of cells 170 in parallel, cell stackThere are many possible cell configurations that may be suitable for use in the energy storage device, including for example and without limitation 7S-3P, 10S-3P, 13S-2P, and 16S-2P configurations.

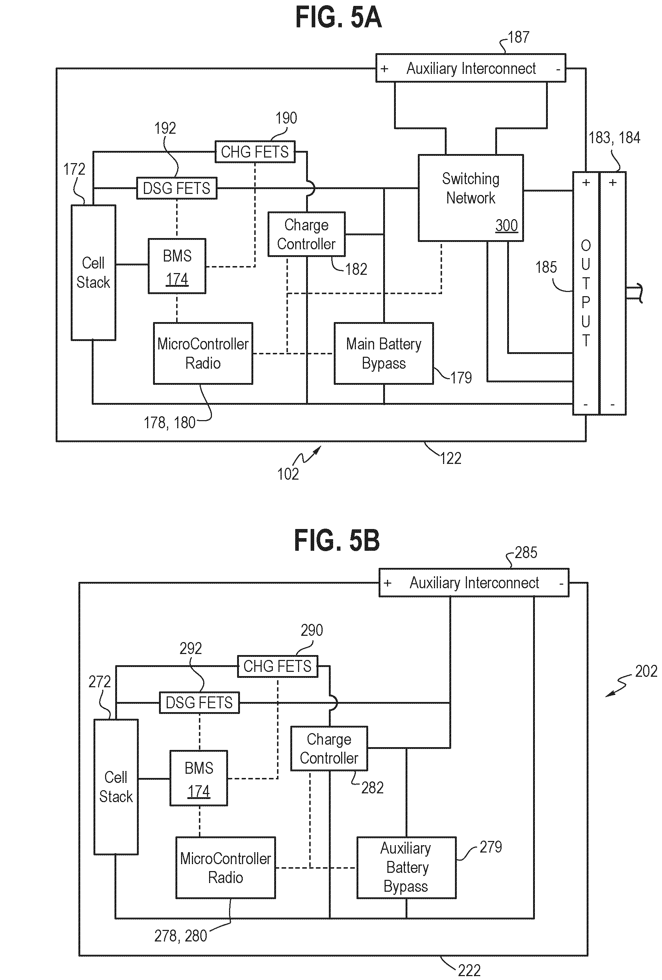

Referring to FIGS. 5A and 5B, the main battery 102 and auxiliary battery 202 each include a battery management system (BMS) 174, 274 disposed in the housing 122, 222. The BMS 174, 274 may be mounted on a printed circuit board (PCB) disposed in the housing. The PCB overlies and has contacts forming electrical connections with the cell stack 172, 272. The PCB also is disposed or mounted in the interior 166, 266 of the housing 122, 222. The BMS 174, 274 connects to each series set of cells in the cell stack 172, 272 to monitor the voltage of the cells for faults. The BMS 174, 274 also measures the current into and out of the cell stack 172, 272 to protect against over current faults. The BMS 174, 274 may include temperature sensors that are distributed throughout the cell stack to monitor the temperature of the cell stack 172, 272 during charge and discharge to prevent damage to the cell stack due to overheating. Using all of this information, the BMS 174, 274 may control charge and discharge field-effect transistors (FETS) 190, 192, 290, 292 to either connect or disconnect the cell stack 172, 272 from the rest of the system during charge and discharge. The BMS 174, 274 receives configuration information from a microcontroller 178, 278 and radio 180, 280. Configuration information may include charge/discharge current limits, individual cell voltage limits, and over/under temperature limits, which may be preset by the microcontroller firmware. The configuration information may also be updated via a firmware update or dynamically based on information received by the microcontroller 178, 278 from other systems on the bicycle, received for example wirelessly by the radio 180, 280.

In one embodiment, the main battery 102 and auxiliary battery 202 also each include a charge controller 182, 282 disposed in the housing 122, 222, and mounted on the PCB. The charge controller 182 may be connected to a DC power source 183 by way of an output 185 and to a main battery interconnect 187. The charge controller 282 is connected to a corresponding auxiliary battery interconnect 285, which may be operably, electrically coupled to the main battery interconnect 187. The charge controller 182, 282 modulates the DC power to safely charge the cell stack 172, 272. In the case of a lithium ion cell stack, the charge controller 182, 282 supplies a constant current to the battery cells 170 of the packs 172, 272 until a target voltage is reached, then the charge controller supplies constant voltage while the current slowly goes down to zero. During charging, the charge controller 182, 282 communicates with and receives messages from the battery management system 174, 274 and the microcontroller 178, 278, such that the charge controller 182, 282 may modulate the charge current to provide a fast and safe charge based on the state of the battery.

The microcontroller 178, 278 may be disposed in the housing 122, 222, or interior cavity 166, 266 thereof, and mounted on the PCB. The microcontroller 178, 278 may receive data from the BMS 174, 274, the charge controller 182, 282, an inertial measurement unit (IMU), and/or smartphone app via wireless or wired communication. The microcontroller 178, 278 uses the data to make determinations about how fast to charge the cell stack 172, 272, how much power to supply from the charge port 162 or interconnect 187, 285, if connected, whether the main battery 102 or auxiliary battery 202 has been dropped when not installed in the bicycle, when to display battery state of charge (SOC) with indicators (e.g., LED's), and/or when to enable the output of the main battery 102 and/or auxiliary battery 202. A smartphone app may receive information about the main battery 102 and auxiliary battery 202 via the microcontroller 178, 278 and radio 180, 280. Some of the information that may be transmitted to the user, or human/machine interface (HMI), otherwise referred to as a user interface, such as a smart phone, may be the SOC, estimated time to charge, faults, temperature of the cell stack 172, 272, voltages of individual cells 170, total cell stack voltage, and the health of cell stack 172, 272. The smartphone app may also transmit information to the cell stack 172, 272.

The main battery 102 and auxiliary battery 202 may also include indicators 203, configured in one embodiment as an array of LEDs mounted on the PCB, with the LEDs being visible to a user through or on the exterior of the housing. The indicators may be a collection of red/blue/green (RGB) LEDs that may be used to display the SOC, error messages, or general bicycle alerts. The LED's may be activated depending on whether the main battery 102 and/or auxiliary battery 202 has been installed, via a battery installation detection device, or by the IMU. Indications may also be transmitted to the user via the smartphone app. A push notification for faults may alert the user in more detail of what has caused the main battery 102 and/or auxiliary battery 202 to fail. Inside the app, battery SOC and health may be displayed on the component screen. In one embodiment, a plurality of indicators provide various indications. There are several potential ways that these LEDs may be used to indicate SOC and faults to the user. For example, a SOC indication may be provided when the main battery 102 and/or auxiliary battery 202 is not installed into the bicycle, and may be triggered for example when the main battery 102 and/or auxiliary battery 202 is picked up or otherwise moved, with the movement being detected by the IMU.

The main battery 102 and auxiliary battery 202 may each include a sensor disposed in or on the housing 122, 222, which detects whether the battery 102, 202 has been installed on the bicycle. The sensor may include a contact, force and/or spatial sensor, and may be a magnetic, button, NFC, IR sensor, or any other type of sensor, whether electrical or mechanical.

The IMU may be disposed in or on the housing 122, 222, and may be mounted on the PCB. The IMU contains an accelerometer, gyroscope, and/or magnetometer. The IMU may use these three sensors to determine the position of the main battery 102 and/or auxiliary batter 202 in space, and the relative movement thereof. The IMU may communicate with the microcontroller 178, 278 to track if the main battery 102 and/or auxiliary battery 202 has had any impacts when not installed on the bicycle 50. If an impact has been detected, additional safety checks may be performed to ensure the main battery 102 and/or auxiliary battery 202 is still safe to use. Data from the IMU may also be transmitted via the radio 180, 280 to other components on the bicycle.

The main battery 102 and auxiliary battery 202 each include charge/discharge FETs 190, 192, 290, 292 or MOSFETS, disposed in or on the housing 122, 222, and may be mounted on the PCB. The FETs 190, 192, 290, 292 are used to control the flow of power into and out of the energy storage device during charge and discharge. The FETs 190, 192, 290, 292 also allow the output terminals of the battery to be inactive when the battery is not installed.

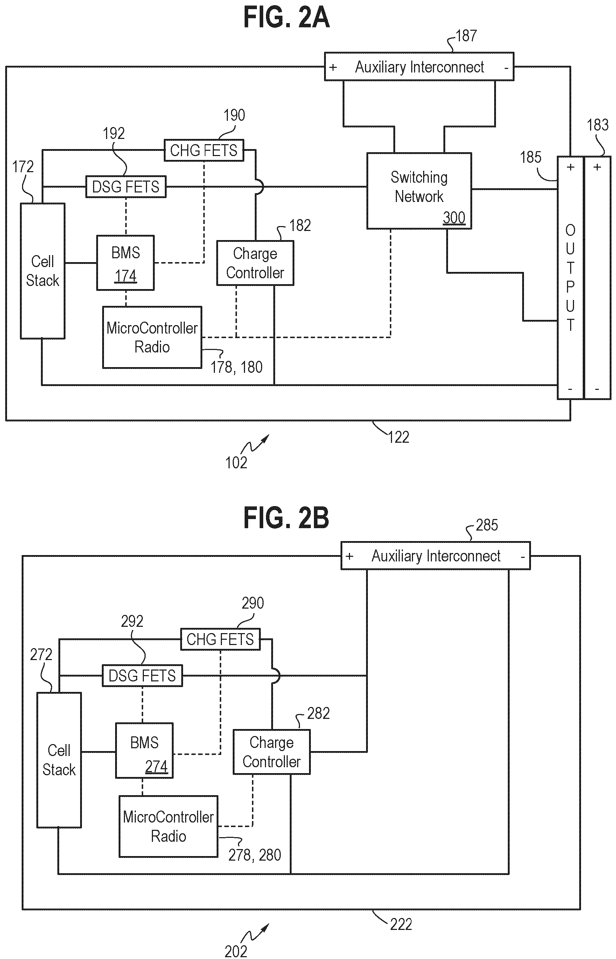

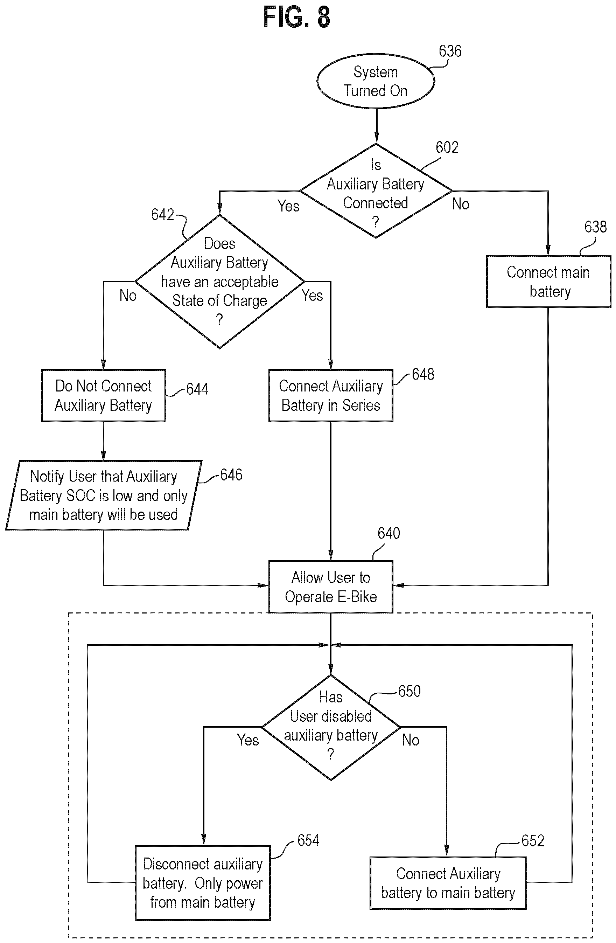

While the main and auxiliary batteries 102, 202 are connected in series during discharge, the main and auxiliary batteries 102, 202 may be connected in parallel or series during charging. In other words, while discharging is always done by connecting the cell stacks 102, 202 in series, as shown in FIGS. 1C and 8, charging can be done by putting the packs in parallel or in series, as shown in FIGS. 2A-4. One or both of the batteries 102, 202 includes the integrated charge controller 182, 282 such that the only thing connected to output of the main cell stack 102 during charging is a DC power source. It is noted that a switching network 300, shown in FIGS. 2A and 5A, is located in the main battery 102, but the switching network 300 is not required to be located in the main battery 102 or auxiliary battery 202 and may be located separately from the main battery 102 or auxiliary battery 202 as a standalone subsystem.

The main battery 102 has a first output voltage and is configured to be electrically coupled to the drive unit 100 and supply power to the drive unit. The auxiliary battery 202 has a second output voltage, such that when the auxiliary battery 202 is releasably coupled to the main battery 102 in series, a total output voltage of the main battery 102 and auxiliary battery 202 is equal to a sum of the first and second output voltages.

The main battery 102 and auxiliary battery 202 may be releasably coupled, mechanically and electrically. For example, the batteries 102, 202 may be coupled with fasteners, such as bolts or screws, or clamps. In one embodiment, the main battery 102 is configured with a first mating feature 301, as shown in FIG. 11 and 12, while the auxiliary battery 202 comprises a second mating feature 302, wherein the first and second mating features 301, 302, and main battery 102 and auxiliary battery 202, are moveable relative to each other between a disengaged configuration, wherein the main battery 102 is decoupled from the auxiliary battery 202, and an engaged configuration, wherein the main battery 102 is coupled to the auxiliary battery 202. In one embodiment, the first and second mating features 301, 302 define a dovetail joint, with the mating feature 301 defining a protruding member with tapered side walls, and the mating feature 302 defining a recess with corresponding tapered side walls. In operation, the auxiliary battery 202 may be slid, in a lateral direction (e.g., parallel to the orientation of a bottom bracket), relative to the main battery so as to insert the mating feature 300 into the mating feature 302.

A latch 310 may releasably secure the main battery 102 and auxiliary battery 202 in the engaged configuration. The mounting direction is parallel to the bottom bracket axle such that most of the load created by riding the bike are carried by the form fitting mating features 301, 302 and a minimal load is applied to the latch 310. The first and second mating features 301, 302 may be configured with chamfers 312 on the first contacting areas of the elements, a slight draft on the main body of the features and some elasticity within the form fit to facilitate the engagement while minimizing movement during riding.

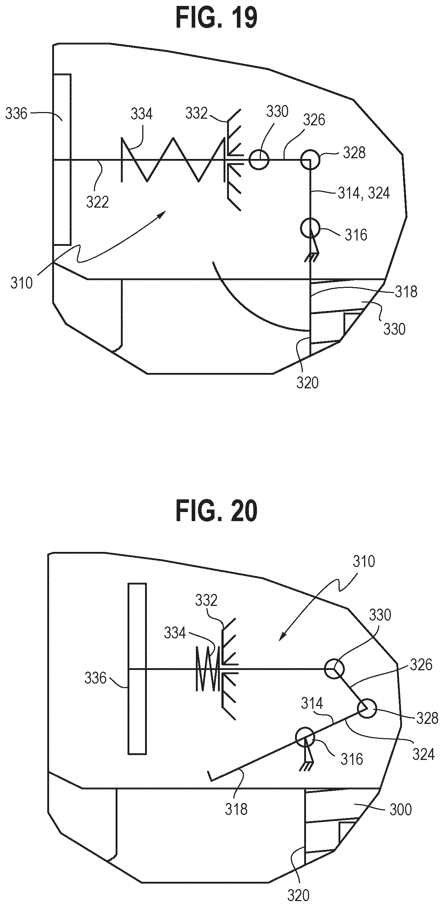

The latch 310 prevents the auxiliary batter 202 from disengaging, for example by sliding, from the main battery 102. In one embodiment, shown in FIGS. 19 and 20, the latch 310 is mounted on the auxiliary battery 202, although it should be understood that the latch 310 may be mounted on the main battery. The latch includes a beam 314 that may be rotated around a pivot 316. The beam 314 includes a first portion 318 that pivots into engagement with a surface of the main battery 102, or a side 320 of the mating feature 301 in one embodiment after the mating features 301, 302 are engaged. A second portion 324 of the beam 314 on the opposite side of the pivot 316 is connected to a push rod 322 via a link 326 with pivotable joints 328, 330 on both ends. The push rod 322 is supported in the auxiliary battery housing 222 by a support 332 and moves along a linear path. A spring 334 is connected to and biases the push rod 322 outwardly, forcing the latch to a closed position as shown in FIG. 19. In operation, the user pushes a button 336 at the end of the push rod 322 to counteract the force of the spring 334 and move the beam 314 out of engagement with the main battery 102, thereby allowing the user to slide the auxiliary battery 202 relative to the main battery 102 to a disengaged position. To mount the batteries 102, 202, the user simply slides the batteries 102, 202 relative to each other to the engaged position with the push button 336 pushed and thereafter releases the push button 336 such that the spring 334 urges the beam 314 into engagement with the main battery 102. In the disclosed embodiment, the pushing direction on the button 336 is the same direction as needed to remove the auxiliary battery 202 from the main battery 102, but it should be understood that the opposite direction is also suitable.

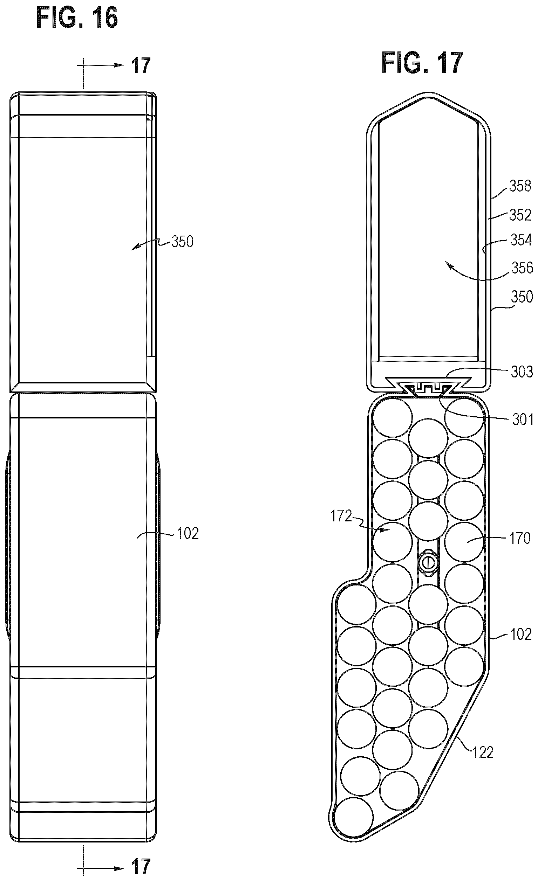

Referring to FIGS. 16-18, a storage container 350 may be engaged with the main battery 102 instead of the auxiliary battery 202, for example if supplemental power is not required and/or if additional storage is desired. The storage container 350 includes a housing 352 having side walls 354 and a cavity 356, wherein various user accessories such as a lock or personal items may be stored. A cover 358 may be slid longitudinally relative to the housing 352 to close the cavity 356. The cover 358 and/or housing 352 may include a latch feature 360, such as detent, to releasably maintain engagement between the cover 358 and the housing 352. The bottom of the housing 352 includes a mating feature 303, described above, that may be matingly engaged with the mating feature 301 of the main battery 102 and allow the storage container 350 and main battery 102 to be moveable relative to each other between a disengaged configuration, wherein the main battery 102 is decoupled from the storage container 350, and an engaged configuration, wherein the main battery 102 is coupled to the storage container 350. The storage container 350 may also include a latch 310 as described above to releasably engage the main battery 102.

### Charging:

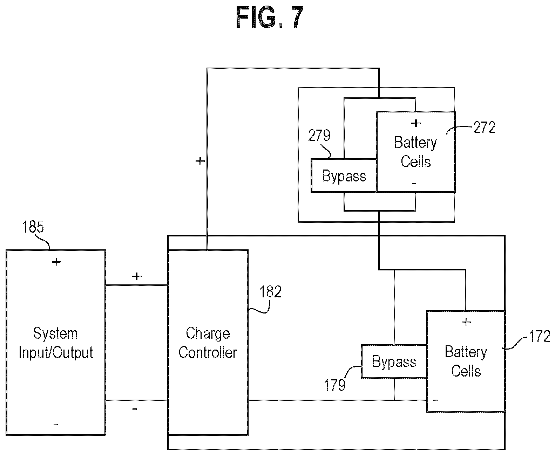

In one embodiment, and referring to FIGS. 2A, 5A and 7, the switching network 300 is operably coupled to the main battery 102 and the auxiliary battery 202 and is configured to connect the main battery 102 and auxiliary battery 202 in parallel with the charge source 183. Alternatively, the switching network 300 is operably coupled to the main battery 102 and the auxiliary battery 202 and is configured to connect the main battery 102 and auxiliary battery 202 in series with the charge source 183. At least one of the main battery 102 and the switching network 300 includes the main battery by-pass switch 179 configured to by-pass charging of the main battery 102. Similarly, at least one of the auxiliary battery 202 and the switching network 300 includes the auxiliary battery by-pass switch 279 configured to by-pass charging of the auxiliary battery 202.

### Parallel Charging Implementation

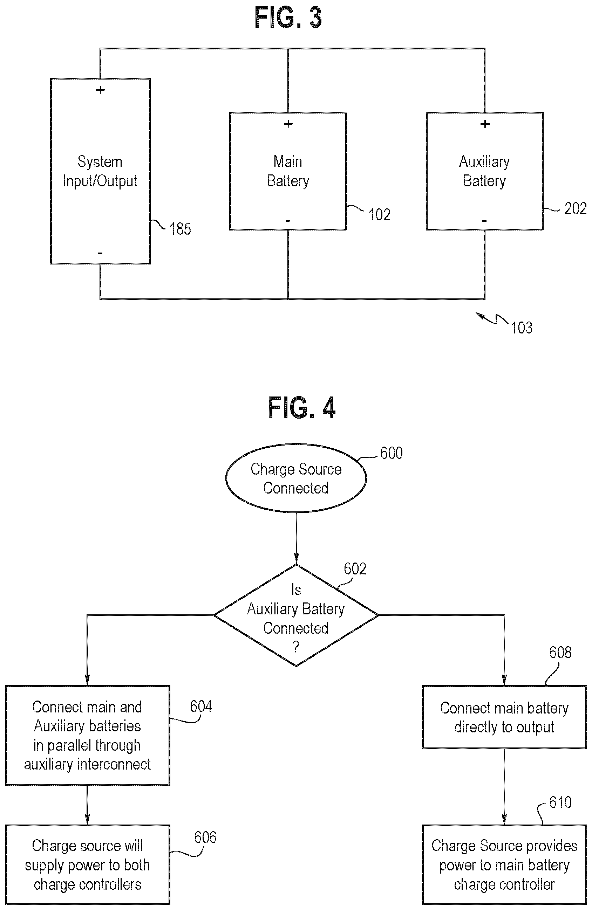

Referring to FIGS. 2A-4, in the parallel charging implementation, each battery 102, 202 contains its own battery management system (BMS) 174, 274, microcontroller 178, 278, radio 180, 280 (which may be optional), charge and discharge safety switches 190, 192, 290, 292, and the charge controller 182, 282. When a charge source 183 is connected to the system, the switching network 300 configures the batteries 102, 202 to be connected to the system output 185 as shown in FIGS. 2A and 3. This allows the charge source 183 voltage to be connected to each of the charge controllers 182, 282 directly so that each battery 102, 202 can regulate its own charge voltage and current. This results in a system where each battery 102, 202 is in an isolated state and its charging process does not affect the charging process of the other battery. Another benefit of this implementation is that the auxiliary battery 202 may be charged independently of the main battery 102 if there is an instance of the auxiliary battery 202 not being electrically connected to the main battery 102.

Referring to FIGS. 2A, 2B, 3 and4, in operation, e.g., in act 600, a charge source 183 is connected to the main battery 102. In act 602, the microcontroller 178 determines whether the auxiliary battery 202 is connected to the main battery 102 in an engaged configuration. It the batteries 102, 202 are connected, then in act 604, the batteries 102, 202 are connected in parallel by way of the interconnects 187, 285, and in act 606, the charge source 183 supplies power to both charge controllers 182, 282. If in act 602, the microcontroller 178 determines that the auxiliary battery 202 is not connected to the main battery 102 in an engaged configuration, then in act 608 the main battery 102 is connected to the output 185, and in act 610 the charge source 183 supplies power to the charge controller 182.

### Series Charging Implementation

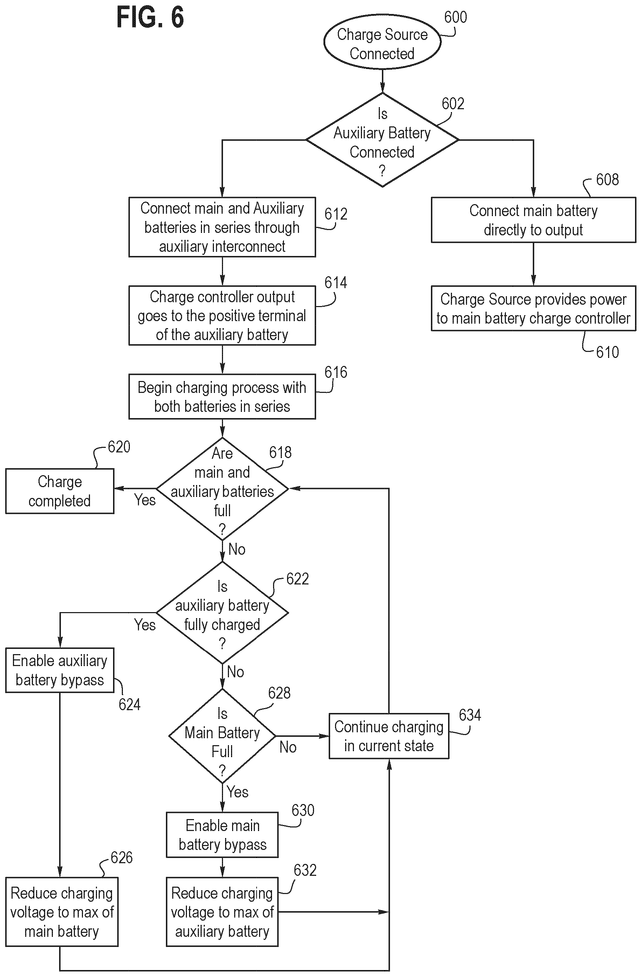

In the series charging implementation, shown in FIGS. 5A-7, only the main battery 102 requires the charge controller 182, with the switching network 300 routing power from the charge controller 182 in the main battery 102 to the auxiliary battery 202 when the auxiliary battery 202 needs to be charged. A battery bypass switch 179, 279 may be included in each battery 102, 202, or in the switching network 300. The battery bypass switch 179, 279 works with the rest of the switches in the system to allow power to flow around the cells 170 in the main or auxiliary batteries 102, 202 and on to the other battery 102, 202 in the system. For example, if the main battery 102 is fully charged, but the auxiliary battery 202 is not fully charged, then the charge source 183 will be connected to the system output 185 and current will flow from the charge controller 182 in the main battery 102. From there the power will go to the positive terminal, or interconnect 285 of the auxiliary battery 202, through the auxiliary battery 202, and then through the main battery bypass switch 179 back to system ground.

Referring to FIGS. 5A, 5B, 6 and 7, in operation, e.g., in act 600, a charge source 183 is connected to the main battery 102. In act 602, the microcontroller 178 determines whether the auxiliary battery 202 is connected to the main battery 102 in an engaged configuration. If in act 602, the microcontroller 178 determines that the auxiliary battery 202 is not connected to the main battery 102 in an engaged configuration, then in act 608 the main battery 102 is connected to the output 185 and in act 610 the charge source 183 supplies power to the charge controller 182.

If the batteries 102, 202 are connected, then in act 612, the batteries 102, 202 are connected in series by way of the interconnects 187, 285, and in act 614, the charge controller 182 output is connected to the expander interconnect 187, 285, and the positive terminal in particular. In act 616, the power supply 183 supplies power to both batteries 102, 202 in series. In act 618, the microcontroller 178, 278, battery management system 174, 274 and charge controller 182 determine whether the batteries 102, 202 are fully charged, and if so, in act 620, charging is complete. If in act 618, the batteries are not fully charged, then in act 622 the microcontroller 278 and battery management system 274 determine whether the auxiliary battery 202 is fully charged, if so, in act 624 the battery bypass switch 279 is actuated to bypass the auxiliary battery 202 such that in act 626, the charging voltage may be reduced to match the main battery 102. In act 622, if the auxiliary battery 202 is not fully charged, then in act 628 the microcontroller 178, battery management system 174 and charge controller 182 determine whether the main battery 102 is fully charged, and if so, the microcontroller 278 and battery management system 274 determine whether the auxiliary battery 202 is fully charged, if so, in act 630 the battery bypass 179 is actuated to bypass the main battery 102 such that in act 632, the charging voltage may be reduced to match the auxiliary battery 202. In act 634, charging of the main and auxiliary batteries 102, 202 and loops back to act 618.

### System Control

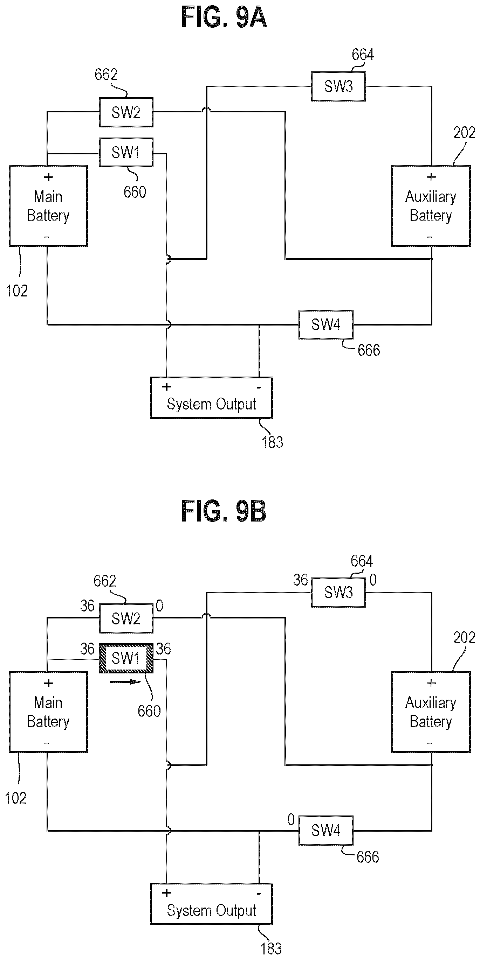

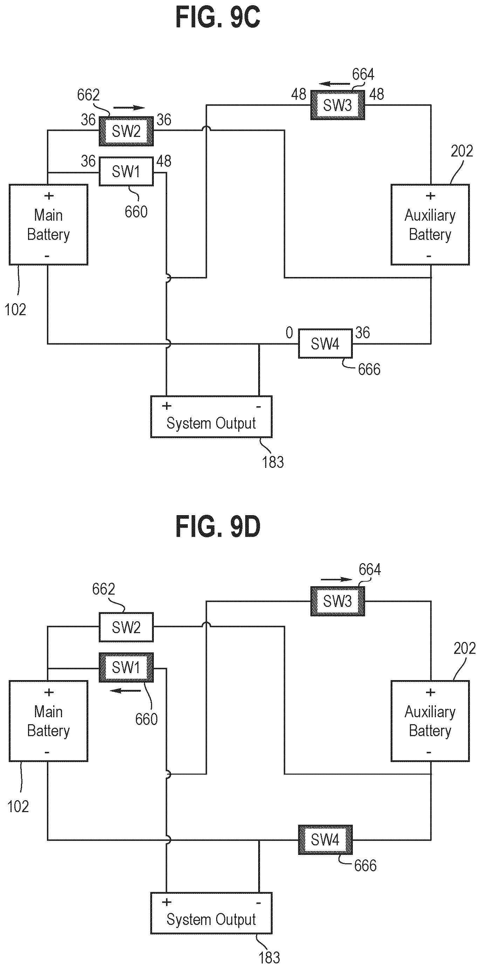

Referring to FIGS. 8 and 9A-D, in operation, e.g., in act 636, the battery system is turned on, and in act 602, the microcontroller 178 determines whether the auxiliary batter 202 is connected to the main battery 102 in an engaged configuration. If in act 602, the auxiliary battery 202 is not connected, then in act 638 the main battery 102 is connected to the drive unit 100 and the user may operate the bicycle in act 640. If in act 602, it is determined that the auxiliary batter 202 is connected to the main battery 102, then in act 642, the microcontroller 278 and BMS 274 determine whether the auxiliary batter 202 has an acceptable SOC. If not, then in in act 644 the auxiliary battery 202 is not connected to the main battery 102 and in act 646 the user is notified of the low SOC of the auxiliary battery 202 and the main battery 102 is connected such that in act 640 the user may use the bicycle 50. If in act 642 the auxiliary battery 202 is determined to have sufficient charge, then in act 648, the auxiliary battery 202 is connected with the main battery 102 in series such that in act 640 the user may thereafter use the bicycle. In this embodiment, the system may be controlled automatically without user intervention, with the auxiliary battery 202 always being incorporated into the system while having an acceptable SOC.

In one embodiment, the user may control the addition of the auxiliary battery 202. In act 650, the system determines whether the user has disabled the auxiliary batter 202, and if not, in act 652, the auxiliary battery 202 is connected to the main battery 102. If so, then in act 654, the auxiliary battery 202 is disconnected from the system and only the main battery 102 is connected to supply power.

Referring to FIGS. 9A-D, if only the main battery 102 is being used, then switch 660 is closed and switches 662, 664, 666 are open. If both the main and auxiliary batteries 102, 202 are being used, then switches 662, and 664 are closed and switches 660 and 666 are open. During parallel charging, switches 660, 664 and 666 are closed. Switches 660 and 664 may be back to back NFETs to prevent current flow through a body diode. Switches 662 and 666 may be single NFETs, but may also be back-to-back NFETs.

### Cell Configuration

Because the system discharges in series, the main and the auxiliary batteries 102, 202 do not have to be the same voltage. In one embodiment, however, the batteries 102, 202 have the same number of cells in parallel. For example, and referring to FIG. 10, if the main and auxiliary batteries 102, 202 both have three (3) cells in parallel then the total system current is not limited by either battery 102, 202. The system has the same current limit with both batteries 102, 202 connected as it does with just the main battery 102. However, if the auxiliary battery 202 has less cells in parallel than the main battery 102, then the auxiliary battery 202 may limit the total system current output to whatever the cells in parallel may output. The same is true if the auxiliary battery 202 has more cells in parallel than the main battery 102, except in this case the main battery 102 may limit the current output. In one embodiment, the total system voltage may be increased to a level where the system current for the same power output would drop enough that the auxiliary battery 202 may have fewer cells in parallel than the main battery 102. It should be understood that the system is not limited to any particular number of cells in series or parallel, with the arrangement shown in FIG. 10 being one exemplary embodiment. That said, in one embodiment, the main battery 102 has a first number of cells 170 arranged in parallel, and the auxiliary battery 202 has a second number of cells 170 arranged in parallel, wherein the first and second numbers are the same.

In an alternative embodiment, dedicated hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The radio 180, 280, or one embodiment of a communication interface, provides for data and/or signal communication from the energy storage device to another component of the bicycle, or an external device such as a mobile phone or other computing device. The communication interface communicates the data using any operable connection. An operable connection may be one in which signals, physical communications, and/or logical communications may be sent and/or received. An operable connection may include a physical interface, an electrical interface, and/or a data interface. The communication interface may be configured as the wireless communication system which communicates wirelessly, and as such may include one or more antennae. The communication interface provides for wireless communications in any now known or later developed format. Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Bluetooth^{®} and or ANT+^{™} standards may also, or alternatively, be used. Accordingly, replacement standards and protocols having the same or similar functions as those disclosed herein are considered equivalents thereof. In an embodiment, the communication interface may be configured to transmit a signal indicative of a power determined from a measured strain of a body. Further, the determined power may be transmitted wirelessly.

The HMI may be one or more buttons, keypad, keyboard, mouse, stylus pen, trackball, rocker switch, touch pad, voice recognition circuit, or other device or component for communicating data between a user and the energy storage device. The HMI may be a touch screen, which may be capacitive or resistive. The HMI may include a liquid crystal display ("LCD") panel, light emitting diode ("LED"), LED screen, thin film transistor screen, or another type of display. The HMI may also include audio capabilities, or speakers.

In an embodiment, the HMI includes an LED indicator. The LED indicator lights to indicate input of the commands or other actions of the power meter system.

The HMI is configured to send and/or receive data such as control signals and/or commands to and/or from bicycle components such as the rear gear changer 37. The HMI communicates the data using any operable connection. An operable connection may be one in which signals, physical communications, and/or logical communications may be sent and/or received. An operable connection may include a physical interface, an electrical interface, and/or a data interface. The HMI provides for wireless communications in any now known or later developed format. Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

In accordance with various embodiments of the present disclosure, methods described herein may be implemented with software programs executable by a computer system, such as the circuitry. Further, in an exemplary, non-limited embodiment, implementations can include distributed processing, component/object distributed processing, and parallel processing. Alternatively, virtual computer system processing can be constructed to implement one or more of the methods or functionality as described herein.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

As used in this application, the term 'circuitry' or 'circuit' refers to all of the following: (a) hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware, as well as other electronic components. The term "circuitry" would also cover, for example and if applicable to the particular claim element, a baseband integrated circuit or applications processor integrated circuit for a mobile computing device or a similar integrated circuit in server, a cellular network device, or other network device.

Processors suitable for the execution of a computer program include, by way of example, both general and special purpose microprocessors, and any one or more processors of any kind of digital computer. Generally, a processor receives instructions and data from a read only memory or a random-access memory or both. The essential elements of a computer are a processor for performing instructions and one or more memory devices for storing instructions and data. Generally, a computer also includes, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, or a power meter system to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations and/or acts are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that any described program components and systems can generally be integrated together in a single software product or packaged into multiple software products.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, are apparent to those of skill in the art upon reviewing the description.

The Abstract of the Disclosure is provided to comply with 37 C.F.R. 91. 72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

Although embodiments have been described for illustrative purposes, those skilled in the art will appreciate that various modifications, additions, and substitutions are possible, without departing from the scope and spirit of the disclosure. It is therefore intended that the foregoing description be regarded as illustrative rather than limiting, and that it be understood that all equivalents and/or combinations of embodiments and examples are intended to be included in this description.

Although certain parts, components, features, and methods of operation and use have been described herein in accordance with the teachings of the present disclosure, the scope of coverage of this patent is not limited thereto. On the contrary, this patent covers all embodiments of the teachings of the disclosure that fairly fall within the scope of permissible equivalents.

## Claims

1. A drive system for a bicycle comprising:
a drive unit;
a main battery comprising a charge controller and having a first output voltage, wherein the main battery is configured to be electrically coupled to the drive unit and supply power to the drive unit; and
an auxiliary battery having a second output voltage, wherein the auxiliary battery is releasably coupled to the main battery in series such that a total output voltage of the main battery and auxiliary battery is equal to a sum of the first and second output voltages.

2. The drive system of claim 1, wherein the charge controller comprises a first charge controller, and wherein the auxiliary battery comprises a second charge controller.

3. The drive system of claim 1 or 2, further comprising a switching network operably coupled to the main battery and the auxiliary battery, wherein the switching network is configured to connect the main battery and auxiliary battery in parallel with a charge source.

4. The drive system of one of the preceding claims, wherein the main battery comprises a first battery management system and the auxiliary battery comprises a second battery management system,
wherein as an optional feature the main battery comprises a first microcontroller operably connected to the first battery management system and the first charge controller and wherein as a further optional feature the auxiliary battery comprises a second microcontroller operably connected to the second battery management system and second charge controller.

5. The drive system of one of the preceding claims, further comprising a switching network operably coupled to the main battery and the auxiliary battery, wherein the switching network is configured to connect the main battery and auxiliary battery in series with a charge source,
wherein as an optional feature at least one of the main battery and the switching network comprises a main battery by-pass switch configured to by-pass charging of the main battery.

6. The drive system of claim 5, wherein at least one of the auxiliary battery and the switching network comprises an auxiliary battery by-pass switch configured to by-pass charging of the auxiliary battery.

7. The drive system of one of the preceding claims, wherein the main battery comprises a first number of cells arranged in parallel, and wherein the auxiliary battery comprises a second number of cells arranged in parallel, wherein the first and second numbers of cells are the same.

8. The drive system of one of the preceding claims, wherein the main battery comprises a first mating feature and the auxiliary battery comprises a second mating feature, wherein the first and second mating features are moveable relative to each other between a disengaged configuration, wherein the main battery is decoupled from the auxiliary battery, and an engaged configuration, wherein the main battery is coupled to the auxiliary battery.

9. The drive system of claim 8, wherein the engaged configuration comprises a first engaged configuration and the disengaged configuration comprises a first disengaged configuration, and further comprising a storage container comprising a third mating feature, wherein the first and third mating features are moveable relative to each other between a second disengaged configuration, wherein the main battery is decoupled from the storage container, and a second engaged configuration, wherein the main battery is coupled to the storage container.

10. A battery system for a bicycle comprising:
a main battery comprising a charge controller and having a first output voltage, wherein the main battery comprises a bicycle mounting arrangement;
an auxiliary battery having a second output voltage, wherein the auxiliary battery is moveable relative to the main battery between a first engaged configuration, wherein the auxiliary battery is releasably coupled to the main battery in series such that a total output voltage of the main battery and auxiliary battery is equal to a sum of the first and second output voltages, and a first disengaged configuration, wherein the auxiliary battery is decoupled from the main battery.

11. The battery system of claim 10, further comprising a storage container moveable relative to the main battery between a second engaged configuration when the auxiliary battery is in the first disengaged configuration, wherein the storage container is releasably coupled to the main battery, and a second disengaged configuration, wherein the storage container is decoupled from the main battery,
wherein the main battery comprises as optional features:
a first mating feature and wherein the auxiliary battery and the storage container each comprise a second mating feature, wherein the first and second mating features are moveable relative to each other between one of the first or second disengaged configurations, wherein the main battery is decoupled from the auxiliary battery and the storage container, and one of the first or second engaged configurations, wherein the main battery is coupled to one of the auxiliary battery or the storage container.

12. A battery system for a bicycle comprising:
a main battery comprising a charge controller, wherein the main battery has a first output voltage, wherein the main battery is configured to be electrically coupled to a drive unit and supply power to the drive unit;
an auxiliary battery having a second output voltage, wherein the auxiliary battery is releasably coupled to the main battery in series such that a total output voltage of the main battery and auxiliary battery is equal to a sum of the first and second output voltages; and
a switching network operably coupled to the main battery and the auxiliary battery, wherein the switching network is configured to connect the main battery and auxiliary battery in parallel or in series with a charge source.

13. The battery system of claim 12, wherein at least one of the main battery and the switching network comprises a main battery by-pass switch configured to by-pass charging of the main battery,
and/or wherein at least one of the auxiliary battery and the switching network comprises an auxiliary battery by-pass switch configured to by-pass charging of the auxiliary battery.

14. The battery system of claim 12 or 13, wherein the main battery comprises a first number of cells arranged in parallel, and wherein the auxiliary battery comprises a second number of cells arranged in parallel, wherein the first and second numbers are the same.

15. The battery system of one of claims 12 to 14, wherein the main battery comprises a first mating feature and the auxiliary battery comprises a second mating feature, wherein the first and second mating features are moveable relative to each other between a disengaged configuration, wherein the main battery is decoupled from the auxiliary battery, and an engaged configuration, wherein the main battery is coupled to the auxiliary battery, further comprising as an optional feature a latch releasably securing the main battery and auxiliary battery in the engaged configuration,
wherein as further optional features the engaged configuration comprises:
a first engaged configuration and the disengaged configuration comprises a first disengaged configuration, and further comprising a storage container comprising a third mating feature, wherein the first and third mating features are moveable relative to each other between a second disengaged configuration, wherein the main battery is decoupled from the storage container, and a second engaged configuration, wherein the main battery is coupled to the storage container.
